# EUROPÄISCHE PATENTSCHRIFT

(11) **EP 4 320 371 B1**
(45) Veröffentlichungstag und Bekanntmachung des Hinweises auf die Patenterteilung: **20.05.2026**
(21) Anmeldenummer: 22722416.9
(22) Anmeldetag: 07.04.2022
(51) Int. Cl.: F16G 13/16

(54) **ENERGIEFÜHRUNGSKETTE**
DRAG CHAIN
CHAÎNE PORTE-CÂBLES

(30) Priorität: 09.04.2021 DE 202021101910 U
(43) Veröffentlichungstag der Anmeldung: 14.02.2024
(73) Patentinhaber: igus SE & Co. KG, 51147 Köln (DE)
(72) Erfinder: KLEIN, Marcel, 53773 Hennef (DE); DOMMNIK, Jörg, 53819 Neunkirchen-Seelscheid (DE)
(74) Vertreter: Lippert Stachow Patentanwälte Rechtsanwälte
(86) Internationale Anmeldenummer: PCT/EP2022/059289
(87) Internationale Veröffentlichungsnummer: WO 2022/214604

(56) Entgegenhaltungen:
- DE-A1- 19 525 478
- DE-U1- 29 802 278
- DE-U1- 29 807 063
- ES-T3- 2 614 782

## Beschreibung

Die Erfindung betrifft eine Energieführungskette zur Führung von Leitungen gemäß dem Oberbegriff von Anspruch **1.** Ferner betrifft die Erfindung ein Endbefestigungsteil für eine Energieführungskette gemäß Anspruch 12 sowie eine Führungsrinne mit einer Energieführungskette gemäß Anspruch 13.

Energieführungsketten, welche unter Ausbildung eines Untertrums, eines Obertrums und eines diese verbindenden Umlenkbereichs angeordnet sind, werden vielfältig eingesetzt und weisen bei vielen Anwendungsfällen eine beträchtliche Länge von mehreren Metern oder auch mehreren 10-Metern auf. Bei großen Kettenlängen wird die Energieführungskette in der Regel mit auf dem Untertrum abgelegtem Obertrum verfahren, sodass das Obertrum auf dem Untertrum gleitet. Die Energieführungskette ist hierbei zumeist in einer Führungsrinne angeordnet, welche die Energieführungskette bei deren Verfahrbewegung seitlich führt, um zu verhindern, dass das Obertrum seitlich von dem Untertrum abrutscht. An der Führungsrinne sind Gleitschienen angeordnet, welche das Obertrum unterstützen, wenn dieses über den Endbereich des Untertrums hinaus verfahren wird, sodass die Länge des Obertrums größer als die des Untertrums ist. Die Gleitschienen sind hierbei in einer Höhe an der Führungsrinne festgelegt, sodass die Oberseite bzw. Gleitfläche der Gleitschienen fluchtend mit der Oberseite des Untertrums angeordnet ist, sodass das Obertrum keinen Höhenversatz erfährt, wenn dieses von dem Untertrum auf die Gleitschiene auffährt. Dies ist für eine gleichmäßige Verfahrbewegung der Kette wesentlich. Eine derartige Führungsrinne ist beispielsweise in der DE 195 12 105 C1 beschrieben.

Insbesondere auch bei langen Energieführungsketten werden diese oftmals mit Gleitelementen, beispielsweise in Form von Gleitschuhen oder Gleitkufen, eingesetzt, welche zwischen Ober- und Untertrum angeordnet sind und über die Kettenseitenlaschen zum gegenüberliegenden Trum vorstehen. Die Gleitelemente werden in der Regel an den oberen Schmalseiten der Kettenglieder, welche dem jeweils anderen Trum zugewandt angeordnet sind, oder an der Oberseite der Querstege angeordnet. Die Gleitelemente dienen dabei der Geräuschdämpfung und/oder als Verschleißschutz, wenn Obertrum und Untertrum bei der Kettenverfahrung aufeinander aufliegen. Die Gleitelemente können einstückig an der Energieführungskette angeformt sein, wie beispielsweise gemäß der WO 2007/121716 A1 oder der DE 196 47 322 A1, oder lösbar an der Kette befestigt sein, wie beispielsweise nach der EP 415029 A1 oder der EP 456537 A1.

Es besteht verschiedentlich das Bedürfnis, eine in einer Führungsrinne geführte Energieführungskette umzurüsten und nachträglich mit derartigen Gleitelementen zu versehen, um die Vorteile derselben nutzen zu können. Verschiedentlich wird auch eine Energieführungskette, welche keine derartigen Gleitelemente aufweist, durch eine andere Energieführungskette mit Kettenlaschen gleicher Laschenhöhe und damit in der Regel auch gleicher Höhe des Aufnahmeraums für die Leitungen, welche derartige Gleitelemente aufweist, ausgetauscht, um von den Vorteilen derselben Gebrauch machen zu können. Dies bedingt jedoch, dass die mit derartigen Gleitelementen versehenen Kettenglieder eine größere Bauhöhe aufweisen, als die ansonsten baugleiche Kettenglieder ohne derartige Gleitelemente. Dies würde an sich erfordern, dass auch die Gleitschienen an der Führungsrinne in ihrer Höhe neu zu positionieren und an die größere Bauhöhe der Kette mit Gleitelementen anzupassen sind, sodass die Gleitschienen wieder fluchtend bzw. auf gleicher Höhe mit der Oberseite der mit Gleitelementen ausgerüsteten Kette angeordnet ist. Dies bedingt dann jedoch einen zusätzlichen Montage- bzw. Umrüstungsaufwand, welcher bei langen Führungsrinnen beträchtlich sein kann.

Die DE 195 25 478 A1 beschreibt eine Energieführungskette mit einem Kettenendglied, wobei das Kettenendglied zwei Seitenteile mit jeweils einem Anlenkabschnitt für die Kette und zwei Winkelelemente aufweist, wobei die Winkelelemente mit den Endbefestigungselementseitenteilen verbunden sind und die Winkelelemente der Befestigung des Kettendgliedes und damit der gesamten Energieführungskette an einem Festpunkt bzw. einem beweglichen Punkt der Energieführungskette dienen.

Die ES 2 614 782 beschreibt eine Energieführungskette mit Endbefestigungsteil, an welchem ein Kraftaufnehmer als Verbindungsglied zur Befestigung des beweglichen Endes der Energieführungskette an einem Mitnehmer vorgesehen ist, wobei der Kraftaufnehmer zwischen dem Mitnehmer und einem beweglichen Ende der Energieführungskette übertragene Zug- und Druckkräfte misst.

Die DE 298 02 278 U1 beschreibt eine Arbeitsplatz-Versorgungsvorrichtung mit einer Schiene und einem daran gefürtem, verschiebbaren Schlitten und mit einer Energieführungskette, welche mit einem Ende bezüglich der Schiene fixiert ist und mit dem anderen Ende am Schlitten befestigt ist. Der Erfindung liegt somit die Aufgabe zugrunde, eine Energieführungskette oder eine Führungsrinne mit einer solchen bereitzustellen, bei welcher der Umrüstaufwand verringert ist, wenn eine Energieführungskette nachträglich mit Zusatzeinrichtungen wie insbesondere Gleitelementen versehen wird oder eine Energieführungskette ohne Zusatzeinrichtungen wie insbesondere Gleitelemente durch eine Energieführungskette mit Zusatzeinrichtungen wie insbesondere Gleitelementen, bei gleicher Höhe der Kettenlaschen, ersetzt wird.

Erfindungsgemäß wird die Aufgabe durch eine Energieführungskette gemäß Anspruch 1, durch ein Endbefestigungsteil gemäß Anspruch 12 und durch eine Führungsrinne mit Energieführungskette gemäß Anspruch 13 gelöst.

Erfindungsgemäß ist die Energieführungskette dadurch ausgebildet, dass das Endbefestigungsteil des Untertrums an der dem Obertrum zugewandten Seite zumindest ein keilförmiges Auflaufelement mit einem Spitzende und einem Breitende aufweist, wobei Spitzende und Breitende in Kettenlängsrichtung, also auch in Längsrichtung des Auflaufelementes, voneinander beabstandet sind. Das Auflaufelement ist mit seiner Längsrichtung zumindest im Wesentlichen parallel zur Kettenlängsrichtung an dem Endbefestigungsteil angeordnet oder anordenbar, wobei sich das Auflaufelement in Befestigungsanordnung an der Kette in der dem Umlenkbereich abgewandten Richtung hin verjüngt und die dem Obertrum zugewandte Oberseite des Auflaufelementes eine Auflaufschräge für das Obertrum ausbildet. Ferner ist das Auflaufelement an dem Endbefestigungsteil lösbar befestigt oder lösbar befestigbar. Hierdurch ist besonders einfach eine Nachrüstung einer Kette mit zumindest einem oder mehreren Auflaufelementen möglich, wenn die Kette mit Gleitelementen nachgerüstet wird oder durch eine Kette ohne Gleitelemente durch eine Kette mit Gleitelementen ausgetauscht wird.

In Befestigungsanordnung des Auflaufelementes an der Kette ist somit das Breitende des keilförmigen Auflaufelementes (allgemein auch: "Auflaufelement") dem Umlenkbereich der Energieführungskette (allgemein auch: "Kette") zugewandt angeordnet und das Spitzende des Auflaufelementes an dem dem Umlenkbereich der Kette abgewandten Ende des Auflaufelementes angeordnet. Durch Anordnung des Auflaufelementes wird somit eine Auflaufschräge für das Obertrum in dem Übergangsbereich zwischen der Oberseite der Gleitschiene, welche das Obertrum unterstützt und eine Gleitfläche für dieses ausbildet, und der Oberseite des mit Gelenkelementen versehenen Untertrums, welche durch die Gleitflächen der Gleitelemente ausgebildet wird, geschaffen. Diese Auflaufschräge gleicht den Höhenversatz zwischen der Oberseite der Gleitschiene und der Oberseite des Untertrums zumindest teilweise oder vorzugsweise vollständig aus.

Die die Bauhöhe der Laschen erhöhende Zusatzeinrichtung ist bevorzugt zumindest ein Gleitelement, anhand dessen die Erfindung erläutert wird. Gegebenenfalls kann das Zusatzeinrichtung jedoch auch anders ausgebildet sein. Die Erfindung wird anhand von Gleitelementen als Zusatzeinrichtung beschrieben, welche besonders bevorzugt sind, allgemein kann jedoch der Begriff "Gleitelement" auch durch den Begriff "Zusatzeinrichtung", welche an der Kette nachgerüstet die Bauhöhe der Kettenglieder erhöht, ersetzt werden.

Beim Ausfahren des Obertrums, wenn also das Obertrum über das Untertrum hinaus ausfährt und dann auf die Gleitschienen auffährt, oder beim Einfahren des Obertrums, wenn die vom Untertrum vorstehende Länge des Obertrums verkürzt wird, wird somit durch die Auflaufschräge der Höhenversatz zwischen Gleitschiene und Oberseite des Gleitelementes vorzugsweise kontinuierlich ausgeglichen. Die Unterseite des Obertrums bzw. die Gleitelemente desselben gleitet/n dann bei der Kettenverfahrung auf der Oberseite des Auflaufelementes, welche somit ebenfalls als Gleitfläche fungiert. Die Gleitschienen können somit in ihrer Montageanordnung, in welcher die Gleitschienenoberseite zumindest im Wesentlichen in Höhe der Kettenlaschenschmalseiten des Untertrums angeordnet sind, wie dies für eine Kette ohne zusätzliche Gleitelemente technisch ordnungsgemäß ist, verbleiben. Eine Umrüstung der Gleitschienen mit Höhenanpassung an die größere Bauhöhe der Kettenglieder mit Gleitschienen ist somit nicht erforderlich. Durch Anordnung der Auflaufschräge wird somit die Gefahr verringert oder beseitigt, dass beim Überfahren des Obertrums über den Übergangsbereich zwischen den Gleitschienenendbereichen und dem ersten mit zumindest einem Gleitelement versehenem Kettenglied des Untertrums sich Kettenglieder des Obertrums mit an den Kettengliedern des Untertrums vorgesehenen Gleitelementen, insbesondere den Stirnseiten oder Begrenzungskanten derselben, verhaken oder auf diesen aufsetzen könnten, was eine gleichmäßige Verfahrbewegung der Kette beeinträchtigen würde, insbesondere auch beim Einfahren des Obertrums. Auch ohne Umrüstung bzw. Neujustierung der Montagehöhe der Gleitschienen den an der Führungsrinne ist eine sehr gleichmäßige Verfahrbewegung der Kette beim Einfahren aber auch beim Ausfahren des Obertrums gewährleistet. Ferner wird durch das Auflaufelement Verschleiß an den Gleitelementen und auch an der Gleitschiene, insbesondere am Endbereich der Gleitschiene, welches dem Endbefestigungsteil des Untertrums zugewandt angeordnet ist, verringert. Dies ist auch beim Ausfahren des Obertrums der Fall, da sonst aufgrund des Höhenversatzes in dem genannten Übergangsbereich die Glieder des Obertrums ohne Unterstützung eine unkontrollierte Höhenbewegung ausführen würden. Die Anordnung des zumindest einen Auflaufelementes schont ferner auch die Gelenkelemente der Kette und erhöht somit deren Lebensdauer und führt zu einer geringeren Geräuschemission, jeweils im Vergleich mit einer entsprechenden Anordnung von Kette und Führungsrinne ohne Verwendung eines erfindungsgemäßen Auflaufelementes. Vorzugsweise sind auch an der Unterseite des Obertrums Gleitelemente vorgesehen. Bevorzugt ist an jedem Glied der Kette zumindest ein Gleitelement vorgesehen.

Wird auf ein "Endbefestigungsteil" Bezug genommen, so ist dies das Endbefestigungsteil des Untertrums, sofern aus dem Zusammenhang nichts anderes ersichtlich ist.

Vorzugsweise ist die Auflauffläche am Breitende des keilförmigen Auflaufelementes in dessen Befestigungsanordnung an der Kette zumindest im Wesentlichen oder genau auf Höhe der Gleitfläche des in Kettenlängsrichtung benachbarten Gleitelementes angeordnet. Hierdurch ist ein nur geringer oder vorzugsweise kein Höhenversatz zwischen der Auflauffläche des Auflaufelementes und der Gleitfläche des Gleitelementes gegeben, sodass eine besonders ruhige und gleichmäßige Verfahrung der Energieführungskette gegeben ist, insbesondere auch am Übergangsbereich zwischen der Kette und der Gleitschiene. Die erfindungsgemäßen Vorteile ergeben sich hierdurch in besonderer Weise.

Vorzugsweise ist die Auflaufschräge des Auflaufelementes, auf welcher das Obertrum auffährt und bei der Verfahrbewegung der Kette zur Anlage kommt, als Ebene ausgebildet. Diese Ebene ist vorzugsweise parallel zu den Gelenkachsen, um welche die Kettenglieder zueinander verschwenkbar sind, ausgerichtet. Hierdurch ergibt sich eine besonders gleichmäßige Verfahrbewegung der Kette, insbesondere auch bei hohen Verfahrgeschwindigkeiten. Hierdurch werden bei der Kettenverfahrung auch Kraftkomponenten auf den Obertrumabschnitt, welcher auf die Auflaufschräge aufläuft, in vertikaler Richtung vermieden. Die "vertikale Richtung" entspricht hierbei der Anordnungsrichtung von Obertrum und Untertrum übereinander. Gegebenenfalls kann die Oberseite bzw. Gleitfläche des Auflaufelementes auch eine gewisse Krümmung aufweisen, diese sollte aber nicht zu stark sein, da dies sonst zu einem Aufbäumen des Obertrums führen könnte, wenn dieses relativ zum Untertrum eingefahren wird.

Die Auflaufschräge, auf welcher die Unterseite des Obertrums auffahren kann, weist somit vorzugsweise in Montageanordnung des Auflaufelementes an dem Endbefestigungsteil eine Steigung auf, vorzugsweise eine gleichmäßige bzw. konstante Steigung, um den besagten Höhenversatz überbrücken zu können.

Der sich verjüngende Bereich des Auflaufelement ist allgemein bevorzugt derart ausgebildet, dass die Verjüngung durch eine Querschnittsverkleinerung des Auflaufelementes ausgebildet ist, im Speziellen durch eine Verringerung der Querschnittshöhe des Auflaufelementes, genauer gesagt Materialhöhe des Auflaufelementes. Die Richtung der Höhenerstreckung des Auflaufelementes entspricht hierbei der Richtung der Höhenerstreckung des Endbefestigungsteils und/oder der Führungsrinne.

Der sich verjüngende Bereich des Auflaufelementes verjüngt sich vorzugsweise mit stetig bzw. kontinuierlich, also ohne im Bereich der Auflaufschräge angeordnete Erhebungen. Der sich verjüngende Bereich des Auflaufelementes verjüngt sich vorzugsweise mit gleichbleibender Steigung über die Längserstreckung der Auflaufschräge.

Der sich verjüngende Bereich des Auflaufelementes kann den Bereich der Auflaufschräge des Auflaufelementes zumindest teilweise oder vollständig ausbilden, insbesondere in Montageanordnung des Auflaufelementes an dem Endbefestigungsteil, besonders bevorzugt einschließlich der Anordnung des Auflaufelementes an der jeweiligen Gleitschiene.

Der sich verjüngende Bereich des Auflaufelementes bzw. die Auflaufschräge erstrecken sich vorzugsweise über ≥ 5-10% oder ≥ 15-20%, besonders bevorzugt ≥ 25-35% oder ≥ 50-75% oder gegebenenfalls auch bis zu 100% der Länge des Auflaufelementes. Hierdurch ist eine besonders flache Auflaufschräge gegeben, welche ein besonders gleichmäßiges und störungsfreies Überfahren des Kettenobertrums über das Auflaufelement bzw. von der Gleitschiene auf das Untertrum der Kette ermöglicht.

Gegebenenfalls kann das Breitende des Auflaufelementes auch einen gewissen Abschnitt mit einer horizontal, also parallel zu den Gleitschienen verlaufenden Oberseite aufweisen, welcher aber vorzugsweise eine nur geringe Länge in Kettenlängsrichtung aufweist. Dieser horizontale Abschnitt ist vorzugsweise fluchtend mit den Gleitflächen der Gelenkelemente des Untertrums angeordnet. Dieser horizontale Abschnitt kann sich über ≥ 5-10% oder ≥ 15-20% oder ≥ 25-50% oder ggf. auch mehr und/oder über ≤ 50-75% oder ≤ 25-35% der Länge des Auflaufelementes in Montageanordnung des Auflaufelementes erstrecken. Die Befestigungsmittel des Auflaufelementes zu Befestigung desselben an dem Endbefestigungsteil der Energieführungskette können hierdurch stabil an dem Auflaufelement, vorzugsweise an dem horizontalen Abschnitt desselben angeordnet sein und die Auflaufschräge kann eine relative große Längserstreckung aufweisen, was sich für die Anwendung des Auflaufelementes als besonders bewährt hat.

Gegebenenfalls kann das Breitende des Auflaufelementes auch einen gewissen Abschnitt mit einer ebenen und/oder einer horizontal, also parallel zu den Gleitschienen und/oder Schmalseiten des Endbefestigungsteils verlaufenden Unterseite aufweisen, welcher aber vorzugsweise eine nur geringe Länge in Kettenlängsrichtung aufweist. Dieser horizontale Abschnitt ist vorzugsweise flächig an die Schmalseiten des Endbefestigungsteils anlegbar bzw. in Montageanordnung des Auflaufelementes angelegt, besonders bevorzugt über einen Teil der Länge oder die vollständige Länge des sich überlappenden Bereichs von Endbefestigungsteilschmalseite und Auflaufelement. Die ebene Unterseite des Auflaufelementes ist bevorzugt in demontiertem Zustand und/oder Montageanordnung des Auflaufelementes gegeben. Dieser ebene und/oder horizontale Abschnitt der Auflaufelementunterseite kann sich über ≥ 5-10% oder ≥ 15-20% oder ≥ 25-50% oder ggf. auch mehr und/oder über ≤ 50-75% oder ≤ 25-35% der Länge des Auflaufelementes in Montageanordnung des Auflaufelementes erstrecken. Hierdurch ist eine stabile Auflage des Auflaufelementes an dem Endbefestigungsteil gegeben.

Die Angabe "≥ 5-10%" oder allgemein die Angabe "≥ x-y%", mit "x" oder "y" jeweils als die angegebene Zahl, ist allgemein im Rahmen der Erfindung als "im Bereich von 5%-10% oder ≥ 10%" bzw. "im Bereich von x%-y% oder ≥ y%" zu verstehen, was entsprechend auch für die Angabe "≤ x-y%" gilt, im Sinne von "im Bereich x%-y% oder ≤ x%".

Vorzugsweise ist der Mitnehmer und/oder Anschlusspunkt für das Endbefestigungsteil des Obertrums höhenverstellbar oder in Bezug auf den Abstand desselben zu dem Untertrum schwimmend gelagert, sodass die unterschiedliche Bauhöhe der Kettenglieder mit zusätzlich vorgesehenen Gleitelementen, gegenüber den Kettengliedern ohne Gleitelemente, ausgeglichen werden kann.

Besonders bevorzugt steht das Spitzende des Auflaufelementes in dessen Befestigungsanordnung an der Kette von dem freien Ende des Endbefestigungsteils des Untertrums vor. Das freie Ende des Endbefestigungsteils ist hierbei allgemein das dem Umlenkbereich der Kette abgewandte Ende des Endbefestigungsteils. Durch den vom Endbefestigungsteil vorstehenden Bereich des Spitzendes des Auflaufelementes wird ein etwaiger Spalt zwischen Endbefestigungsteil und der dem Endbefestigungsteil benachbarten Gleitschiene der Führungsrinne zumindest teilweise oder vollständig überbrückt. Insbesondere kann das Spitzende des Auflaufelementes auch mit der Gleitschiene in Überdeckung angeordnet sein, wobei die Unterseite des Auflaufelementes vorzugsweise an der Oberseite der Gleitschiene anliegt. Durch diese zumindest teilweise oder vollständige Spaltüberbrückung wird eine besonders gleichmäßige Verfahrung der Kette in dem Übergangsbereich zwischen dem Untertrumende bzw. dem Endbefestigungsteil einerseits und der Gleitschiene andererseits ermöglicht. Ferner kann hierdurch die Auflaufschräge des Auflaufelementes eine vergleichsweise große Länge aufweisen und somit die Auflaufschräge relativ flach verlaufen bzw. eine nur geringe Steigung aufweisen. Die Laufruhe der Kette beim Überfahren des genannten Übergangsbereichs wird hierdurch verbessert und damit auch eine Geräuschentwicklung bei der Kettenverfahrung reduziert und die Lebensdauer der Kette erhöht.

Die Auflaufschräge weist bevorzugt einen Winkel von ≤ 20° oder ≤ 15° oder ≤ 10°, insbesondere auch ≤ 5° oder ≤ 3° oder ≤ 2° zu der der geradlinigen Verbindungslinie der Laschenschmalseiten des Untertrums und/oder zu der Unterseite des Auflaufelementes in dessen Befestigungsanordnung an der Kette auf.

Die Höhe des Auflaufelementes am freien Spitzende kann ≤ 40% oder ≤ 30°, vorzugsweise ≤ 20% oder ≤ 10%, bzw. ca. 5%, der Höhe des Auflaufelementes am Breitende betragen.

Die Unterseite des Auflaufelementes in seiner Befestigungsanordnung an der Kette ist vorzugsweise eben ausgebildet.

Vorzugsweise ist das Auflaufelement an den Seitenteilen des Endbefestigungsteils angeordnet. Das Auflaufelement liegt mit seiner Unterseite vorzugsweise flächig an den Seitenteilen des Endbefestigungsteils an, wodurch dieses lagestabilisiert wird. Die Unterseite des Auflaufelementes ist hierbei die der Auflaufschräge gegenüberliegende Seite des Auflaufelementes, welche zwischen sich unter Ausbildung des Keils einen Winkel einschließen.

Vorzugsweise ist an den beiden Seitenteilen des Endbefestigungsteils, welche dem Obertrum zugewandt sind, jeweils ein Auflaufelement angeordnet. Gegebenenfalls kann auch nur ein Auflaufelement vorgesehen sein, welches sich bevorzugt über die beiden Seitenteile des Endbefestigungsteils erstreckt und diese überbrückt.

Die Seitenteile des Endbefestigungsteils sind allgemein im Rahmen der Erfindung bevorzugt parallel zu den Seitenlaschen des Untertrums angeordnet und bevorzugt an den Seitenteilen des dem Endbefestigungsteil benachbarten Kettengliedes des Untertrums angekoppelt und an diesen in Kettenlängsrichtung zugkraftaufnehmend befestigt. Die Seitenteile des Endbefestigungsteils koppeln vorzugsweise gelenkig an den Seitenlaschen des Kettenendgliedes des Untertrums an. Als "Endglied der Kette bzw. des Untertrums" sei allgemein das Kettenglied verstanden, welches unmittelbar an dem Endbefestigungsteil der Kette ankoppelt und vorzugsweise gelenkig mit diesem verbunden ist. Die Kette weist somit zwei Kettenendglieder auf, entsprechend den beiden Endbereichen der Kette.

Allgemein bevorzugt ist das Auflaufelement in Verlängerung der Gleitflächen der Gleitelemente in Kettenlängsrichtung angeordnet. Hierdurch wird in Kettenlängsrichtung eine linienförmig durchgehende, bevorzugt geradlinige Lauffläche des Untertrums einschließlich Auflaufelement bereitgestellt, welche das Obertrum unterstützt, wenn das Obertrum im Übergangsbereich zwischen Gleitschienen und dem Untertrum verfahren wird. Die an der Führungsrinne angeordneten Gleitschienen sind vorzugsweise in Verlängerung der Anlageflächen des Untertrums und des Auflaufelementes für das Obertrum angeordnet. Durch die Anordnung des Auflaufelementes an den genannten Seitenflächen bzw. Seitenlaschen wird zudem eine möglichst breite und daher stabile Auflage für das Obertrum bereitgestellt.

Die Seitenteile des Endbefestigungsteils können beispielsweise rahmenförmig ausgebildet sein oder einen rahmenförmigen Abschnitt aufweisen, wobei der Rahmen einseitig, zum Aufnahmeraum für die Leitung abgewandt oder vorzugsweise zugewandt, geschlossen ausgebildet sein kann. Die Seitenteile des Endbefestigungsteils sind vorzugsweise durch eine Traverse miteinander verbunden, welche das Endbefestigungsteil stabilisiert und als Abstandshalter der Seitenteile zueinander fungieren kann. Das Endbefestigungsteil kann auch eine Traverse zur Halterung von Zugentlastungselementen für die von der Kette geführten Leitungen aufweisen. Hierbei kann an der dem Obertrum zugewandten und/oder dem Obertrum abgewandten Seite des Endbefestigungsteils jeweils zumindest eine Traverse angeordnet sein. Gegebenenfalls kann die eine oder auch die mehreren Traversen des Endbefestigungsteils einstückig oder lösbar mit den Seitenteilen des Endbefestigungsteils verbunden sein. Die Traverse/n des Endbefestigungsteils sind vorzugsweise parallel zu den Querstegen der Kettenglieder angeordnet. Es versteht sich, dass die zumindest eine oder mehreren Traversen des Endbefestigungsteils auch plattenförmig ausgebildet sein können. Vorzugsweise sind an beiden Seitenteilen des Endbefestigungsteils jeweils ein Auflaufelement angeordnet, gegebenenfalls kann auch ein Auflaufelement vorgesehen sein, welches die beiden Seitenteile des Endbefestigungsteils miteinander verbindet.

Ist das Auflaufelement an dem Endbefestigungsteil des Untertrums befestigbar oder befestigt, ist dadurch eine baulich kompakte Ausführungsform gegeben und die Energieführungskette auf einfache Weise durch nachträgliche Anordnungen des Auflaufelementes nachrüstbar.

Besonders bevorzugt ist das Auflaufelement an dem Endbefestigungsteil des Untertrums angeordnet bzw. an diesem befestigt, insbesondere lösbar befestigt. Das Auflaufelement ist hierdurch nahe an dem dem Endbefestigungsteil zugewandten Ende der Gleitschiene angeordnet. Das Spitzende des Auflaufelementes kann hierdurch relativ nahe an dem Befestigungsbereich des Auflaufelementes mit dem Endbefestigungsteil angeordnet sein, wodurch eine stabile Ausführungsform geschaffen ist. Auf das Auflaufelement wirkende Kräfte bei Verfahrung des Obertrums können hierdurch besonders günstig durch die Befestigungsbereiche des Auflaufelementes an dem Endbefestigungsteil aufgefangen werden. Ferner wird durch Anordnung des Auflaufelementes an dem Endbefestigungsteil ein besonders gleichmäßiger Übergang zwischen dem Kettenendglied des Untertrums und der Gleitschiene bereitgestellt, was zu einer besonders gleichmäßigen Verfahrbewegung der Kette führt, wenn das Obertrum von den Gleitelementen des Untertrums auf die Gleitschiene überfährt, oder entsprechend in entgegengesetzter Richtung. Die Befestigung des Auflaufelementes an dem Endbefestigungsteil ist ferner deshalb besonders vorteilhaft, da dieses ortsfest und vorzugsweise lageunveränderlich an dem Anschlusspunkt wie beispielsweise einer Tragkonstruktion oder dem Boden eines Bauwerkes festgelegt ist. Ferner ist in der Regel auch die Führungsrinne ortsfest an dem Untergrund oder einer Tragkonstruktion befestigt, welche jeweils vorzugsweise ortsfest angeordnet sind. Hierdurch ist eine besonders einfache und dauerhafte Anordnung bzw. Befestigung des Auflaufelementes an dem Endbefestigungsteil gegeben, da das Anschlusselement mit seinen Befestigungsbereichen hierdurch besonders geringen mechanischen Beanspruchungen bei der Kettenverfahrung ausgesetzt ist, wie beispielsweise auch Schwingungen oder anderen Wechselbelastungen. Bei der Kettenverfahrung auf das Auflaufelement wirkende Kräfte können hierdurch über das Endbefestigungsteil besonders einfach aufgenommen und in den Untergrund oder die Tragkonstruktion übertragen werden.

Vorzugsweise weist das Endbefestigungsteil mehrere Anschlusspunktbefestigungsbereiche zur Befestigung desselben an einem Anschlusspunkt auf, mittels welcher das Endbefestigungsteil vorzugsweise lagefixiert, besonders bevorzugt verdreh- und/oder verschiebungssicher, an dem Anschlusspunkt befestigbar ist. Durch die mehreren Anschlusspunktbefestigungsbereiche kann das Endbefestigungsteil an verschiedenen Anschlusspunkten unterschiedlicher räumlicher Anordnung befestigt werden. Hierbei können beispielsweise an beiden Enden der Kette baugleiche Endbefestigungsteile vorgesehen sein, mittels welcher das Untertrum bzw. das Obertrum an dem jeweiligen Anschlusspunkt befestigbar sind. Bei Befestigung des Endbefestigungsteils an dem Anschlusspunkt wird somit einer der Anschlusspunktbefestigungsbereiche zur entsprechenden Befestigung benutzt, die anderen Anschlusspunktbefestigungsbereiche sind in Bezug auf die Befestigung des Endbefestigungsteils in einem Anschlusspunkt unbenutzt. Beispielsweise können an einem Endbefestigungsteil an einer oberen Schmalseite und/oder an einer unteren Schmalseite und/oder an einer den Gleitschienen zugewandten Stirnseite desselben Anschlusspunktbefestigungsbereiche vorgesehen sein, wobei die Schmalseiten des Endbefestigungsteils den Schmalseiten der Kettenlaschen entsprechen. Erfindungsgemäß bevorzugt ist hierbei das Auflaufelement derart ausgebildet, dass dieses an einem Anschlusspunktbefestigungsbereich des Endbefestigungsteils befestigt oder zur Befestigung an diesem ausgebildet ist, bevorzugt an einer Schmalseite desselben. Dies gilt insbesondere auch für die Befestigungselemente des Auflaufelementes. Bevorzugt sind die Befestigungsbereiche bzw. -elemente des Auflaufelementes korrespondierend zu den Anschlusspunktbefestigungsbereichen des Endbefestigungsteils ausgebildet.

Die Befestigungselemente des Auflaufelementes, welche an einem Anschlusspunktbefestigungsbereich des Endbefestigungsteils festlegbar sind, sind bevorzugt mit als Form- und/oder Kraftschlussmittel ausgebildet, vorzugsweise als Klemm- und/ oder Rastmittel. Hierdurch ist eine konstruktiv besonders einfache Ausführungsform gegeben und die Nachrüstung der Energieführungskette bzw. des Systems aus Energieführungskette und Führungsrinne besonders einfach und schnell nachrüstbar. Vorzugsweise sind die Befestigungselemente des Auflaufelementes einstückig an diesem angeformt, wodurch sich die Montage des Auflaufelementes an der Kette erleichtert.

Vorzugsweise korrespondieren die Befestigungselemente des Auflaufelementes mit den Befestigungslementen der Anschlusspunktbefestigungsbereiche des Endbefestigungsteils, mittels welcher dieses an einem Anschlusspunkt festlegbar ist. Hierdurch ist eine Nachrüstung der Kette mit dem zumindest einen Auflaufelement wesentlich erleichtert. Zusätzliche Befestigungseinrichtungen für das Auflaufelement an der Kette sind hierdurch entbehrlich. Die die Befestigungselemente des Auflaufelementes zur Festlegung desselben an der Kette sind vorzugsweise an der Unterseite des Auflaufelementes angeordnet. Die Montage des Auflaufelementes ist hierdurch vereinfacht.

Gegebenenfalls, weniger bevorzugt, kann auch das Auflaufelement auch an einer Traverse des Endbefestigungsteils befestigt sein.

Nach einer bevorzugten Ausführungsform ist das Auflaufelement elastisch deformierbar ausgebildet, wobei besonders bevorzugt das Auflaufelement in demontiertem Zustand bogenförmig ausgebildet ist. In Ansicht des Auflaufelementes von der Unterseite desselben ist das Auflaufelement vorzugsweise konkav ausgebildet. Bei Anordnung oder Befestigung des Auflaufelementes an der Kette, bei welcher die Auflaufelementunterseite vorzugsweise zumindest im Wesentlichen geradlinig ausgebildet ist, kann das Spitzende des Auflaufelementes somit mit einer Vorspannung an der Gleitschiene anliegen. Hierdurch werden Vibrationen oder Schwingungen des Auflaufelementes vermieden, wenn das Obertrum auf das Auflaufelement aufläuft oder sich von diesem entfernt, wodurch ein besonders sicherer Betrieb der mit dem Auflaufelement nachgerüsteten Energieführungskette bzw. des Systems aus Kette und Führungsrinne gewährleistet wird.

Gemäß einer anderen bevorzugten Ausführungsform ist das Auflaufelement zumindest im Wesentlichen starr ausgebildet.

Hierdurch werden Schwingungen des Auflaufelementes oder ein Zurückfedern desselben, wenn das Obertrum auf das Auflaufelement auffährt oder von diesem abgeführt wird, verringert oder vermieden.

Bevorzugt besteht die Auflauffläche des Auflaufelementes oder das gesamte Auflaufelement aus einem Material mit geringer Gleitreibung und/oder hoher Verschleißfestigkeit. Hierdurch wird die Laufruhe der Kette, wenn diese in Kontakt mit dem Auflaufelement verfahren wird, erhöht und Verschleiß vermindert.

Vorzugsweise beträgt die Länge des Auflaufelementes größer/gleich der 0,125-fachen oder größer/gleich der 0,25-fachen oder vorzugsweise größer/gleich der 0,5-fachen oder größer/gleich der 0,75 -fachen Länge des Endbefestigungsteils, besonders bevorzugt ist die Länge des Auflaufelementes größer/gleich der Länge des Endbefestigungsteils. Durch diese vergleichsweise große Länge des Auflaufelementes kann die Auflauffläche eine besonders geringe Steigung aufweisen, wodurch die Kette eine besonders hohe Laufruhe aufweist, wenn das Obertrum von den Gleitschienen über das Auflaufelement auf das Untertrum auffährt, bzw. in entgegengesetzter Richtung verfahren wird. Die erfindungsgemäßen Vorteile ergeben sich hierdurch in besonderer Weise. Bevorzugt ist hierbei die Länge des Auflaufelementes größer als der Abstand der in Verfahrrichtung der Kette vorderen Stirnkanten unmittelbar aufeinanderfolgender Gleitelemente des Obertrums, beispielsweise größer/gleich 1,15 oder größer/gleich 1,25 desselben, sodass also beim Abgleiten eines gegebenen Gleitelementes von dem Auflaufelement bereits das nachfolgende Gleitelement auf dem Auflaufelement aufgefahren ist, sodass das Auflaufelement durch das Gewicht des Obertrums bei dessen Verfahren permanent gegen das Endfestigungsteil und/oder die Geleitschiene gedrückt wird, was ein unbeabsichtigtes Lösen des Auflaufelementes insbesondere auch bei schneller Kettenverfahrung erschwert oder verhindert. Die Länge des Auflaufelementes kann kleiner/gleich der 2-fachen oder kleiner/gleich der 1,5-fachen oder kleiner/gleich der 1,25-fachen Länge des Endbefestigungsteils aufweisen, wodurch auch in Montageanordnung des Auflaufelementes dieses eine hohe Stabilität aufweisen kann, auch gegenüber dynamischen Kräften beim Auf- oder Abfahren des Obertrums von dem Auflaufelement, was ansonsten beispielsweise zu unerwünschten Vibrationen des Spitzendes des Auflaufelementes führen könnte.

Das Spitzende des Auflaufelementes ist vorzugsweise nicht mit Befestigungsmittels zur Festlegung des Auflaufelementes an einem anderen Bauteil wie z.B. einer Gleitschiene oder einem Untergrund versehen.

Die Erfindung umfasst ferner ein Endbefestigungsteil für eine Energieführungskette nach dem Oberbegriff von Anspruch 1 oder für eine erfindungsgemäße Kette, wobei zumindest ein keilförmiges Auflaufelement an dem Endbefestigungsteil angeordnet oder an diesem befestigt ist.

Von der Erfindung ferner umfasst ist eine Führungsrinne mit einer Energieführungskette nach dem Oberbegriff von Anspruch 1 oder allgemein gemäß der vorliegenden Erfindung, insbesondere nach einem der Ansprüche 1 bis 12. Die Energieführungskette wird bei deren Verfahrbewegung seitlich von der Führungsrinne geführt, um ein Abrutschen des Obertrums von dem Untertrum zu verhindern und/oder die Verfahrung der Kette entsprechend der von der Führungsrinne vorgegebenen Richtung zu gewährleisten, wobei die der Verfahrweg der Kette in der Regel geradlinig ist, ohne jedoch hierauf beschränkt zu sein, also bspw. auch bogenförmig sein kann. Die Führungsrinne weist zumindest eine in deren Längsrichtung verlaufende Gleitschiene auf, auf welcher das Kettenobertrum ablegbar oder abgelegt ist. In der Regel sind an beiden Schenkeln der Führungsrinne, welche die Kette beidseitig umgeben und diese seitlich führen, jeweils zumindest eine Gleitschiene angeordnet, vorzugsweise an beiden Rinnenschenkeln einander gegenüberliegend. Die Gleitschienen unterstützen das Obertrum, wenn dieses über den Endbefestigungsbereich des Untertrums hinaus ausgefahren ist und das Obertrum somit eine größere Länge als das Untertrum aufweist. Die Oberseiten der Gleitschienen unterstützen hierbei das Obertrum. Die Gleitschienen erstrecken sich in ihrer Breite vorzugsweise zumindest über die Breite der Kettenlaschen, vorzugsweise zumindest im Wesentlichen über die Breiten der Gleitelemente der Kette. Die Gleitschienen sind vorzugsweise horizontal angeordnet, gegebenenfalls kann die jeweilige Gleitschiene aber auch mit einer Neigung zur horizontalen Raumrichtung angeordnet sein. Die Gleitschienen sind vorzugsweise geradlinig ausgebildet, besonders bevorzugt an dem freien Endbereich der Führungsrinne oder über die gesamte Längserstreckung der jeweiligen Gleitschiene, gegebenenfalls können die Gleitschienen aber auch bezüglich deren Querstreckung und/oder Höhenerstreckung bogenförmig ausgebildet sein. Gegebenenfalls kann anstelle von zwei Gleitschienen an den beiden gegenüberliegenden Schenkeln der Führungsrinne auch nur eine Gleitschiene vorgesehen sein, welche sich zumindest im Wesentlichen über die Breite des Innenraumes der Führungsrinne erstreckt. Die Gleitschienen sind vorzugsweise formschlüssig, beispielsweise durch Verschrauben oder einhaken, an der Führungsrinne befestigt. Die Gleitschienen sind vorzugsweise durch Befestigungsmittel ortsfest an der Führungsrinne fixiert.

Die Führungsrinne ist allgemein bevorzugt zumindest im Wesentlichen U-förmig ausgebildet. Die Führungsrinne kann sich allgemein über die gesamte Kettenlänge erstreckt, insbesondere in Bezug auf den maximalen Verfahrweg des Obertrums in beiden Verfahrrichtungen desselben, also mit maximaler Länge des Obertrums oder mit maximaler Länge des Untertrums.

Vorzugsweise ist das keilförmige Auflaufelement derart an der Kette, insbesondere am Endbefestigungsteil, angeordnet, dass dieses einen Spalt zwischen dem Endbefestigungsteil und der Gleitschiene zumindest teilweise oder vorzugsweise vollständig überbrückt. Das Spitzende des Auflaufelementes ist hierbei vorzugsweise zumindest im Wesentlichen fluchtend mit der Gleitschiene angeordnet, sodass dieses auf Höhe der Gleitschienenoberseite, d.h. der Auflagefläche für das Obertrum, angeordnet ist. Hierdurch wird die Laufruhe der Kette wesentlich erhöht, Geräuschemissionen bei der Verfahrung der Kette vermindert und die Lebensdauer der Kette erhöht, wenn aufgrund einer Nachrüstung einer Kette mit Gleitelementen oder aufgrund eines Einsatzes einer Kette mit zusätzlichen Gleitelementen eine Höhenfehlanpassung der Gleitschienen relativ zu der Kette gegeben ist.

Vorzugsweise ist das Auflaufelement derart an der Kette, insbesondere dem Endbefestigungsteil, angeordnet, dass dieses den Endbereich der zumindest einen Gleitschiene überdeckt bzw. die Gleitschiene an der Oberseite derselben mit dem Spitzende übergreift. Das Spitzende des Auflaufelementes kann hierbei lose an der Gleitschiene anliegen. Vorzugsweise liegt das Spitzende mit einer gewissen Anpresskraft an der Gleitschiene bzw. Gleitschienenoberseite an, um dynamische Kräfte, welche beim Auffahren oder Herunterfahren des Obertrums von dem Auflaufelement auftreten, auffangen zu können. Die Anpresskraft kann dadurch ausgeübt werden, dass ein elastisches, von der Unterseite her konkaves Auflaufelement mit geringerer Krümmung der Unterseite oder mit geradliniger Unterseite in seiner Befestigungsanordnung an der Kette vorliegt, sodass die elastische Rückstellkraft eine Anpresskraft ausübt. Vorzugsweise liegt der Endbereich des Auflaufelementes spaltfrei an der Gleitschiene an.

Das Auflaufelement kann sich in seiner Befestigungsanordnung an der Kette über größer/gleich die 0,1-fache oder größer/gleich die 0,2-fache, beispielsweise in etwa seine halbe Länge oder mehr über die Gleitschiene erstrecken, wodurch die Auflaufschräge des Auflaufelementes eine sehr geringe Steigung aufweist und daher die Kette auch bei hohen Verfahrgeschwindigkeiten eine sehr hohe Laufruhe aufweist.

In Montageanordnung des Auflaufelementes an dem Endbefestigungsteil, bevorzugt mit Anlage des Auflaufelementes an der Gleitschiene, erstreckt sich die dem Endbefestigungsteil bzw. der Gleitschiene zugewandte Unterseite des Auflaufelementes horizontal in Bezug auf die Raumrichtung bzw. in geradliniger Verlängerung und fluchtend mit der Oberseite der Schmalseite des Endbefestigungsteils.

Allgemein im Rahmen der Erfindung ist vorzugsweise eine Kette mit einem in Bezug auf die Kettenlänge mittigen Anschlusspunkt vorgesehen, also eine Kette mit einer sogenannten "Mitteneinspeisung". Bei maximaler Verfahrbewegung des Obertrums in Vorwärts- und Rückwärtsrichtung ist der Anschlusspunkt und das Endbefestigungsteil des Untertrums somit in der Mitte des gesamten Verfahrweges der Kette angeordnet. Die Endbereiche der Gleitschienen sind hierbei benachbart dem Endbefestigungsteil des Untertrums angeordnet, in der Regel jedoch mit einem gewissen Spalt bzw. Abstand zwischen diesen.

Die Erfindung wird nachfolgend anhand eines Ausführungsbeispiels erläutert. Sämtliche Merkmale des Ausführungsbeispiels seien allgemein im Rahmen der Erfindung unabhängig voneinander oder in Kombination miteinander offenbart. Es zeigen:
- Fig. 1:: einen Abschnitt einer Führungsrinne mit Gleitschiene und mit erfindungsgemäßer Energieführungskette, welche mit einem Auflaufelement versehen ist in Seitenansicht (Fig. 1a), in Detailansicht (Fig. 1b) und in perspektivischer Ansicht (Fig. 1c),
- Fig. 2:: eine Ansicht einer Führungsrinne mit erfindungsgemäßer Energieführungskette entsprechend Fig. 1 mit auf einer Gleitschiene aufgelegtem Obertrum in Seitenansicht und in Detailansicht (Fig. 2a, 2b),
- Fig. 3:: eine Explosionsdarstellung des Übergangsbereichs zwischen Endbefestigungsteil und Gleitschiene in perspektivischer Ansicht von unten (Fig. 3a) und von oben (Fig. 3b) mit Endbefestigungsteil und Auflaufelement entsprechend Fig. 1 und 2,
- Fig. 4:: ein Endbefestigungsteil mit Auflaufelement entsprechend den Fig. 1 bis 3 in Explosionsdarstellung in einer ersten und einer zweiten perspektivischen Ansicht (Fig. 4a, 4b),
- Fig. 5:: ein Endbefestigungsteil mit Auflaufelement entsprechend den Fig. 1 bis 4 in Befestigungsanordnung des Auflaufelementes in Seitenansicht (Fig. 5a), in Draufsicht (Fig. 5b) und im Schnitt V-V gemäß Fig. 5b (Fig. 5c),
- Fig. 6:: ein erfindungsgemäßes Auflaufelement in Draufsicht (Fig. 6a), stirnseitiger Ansicht (Fig. 6b), Seitenansicht (Fig. 6c), Ansicht von unten (Fig. 6d) und in perspektivischer Ansicht (Fig. 6e).

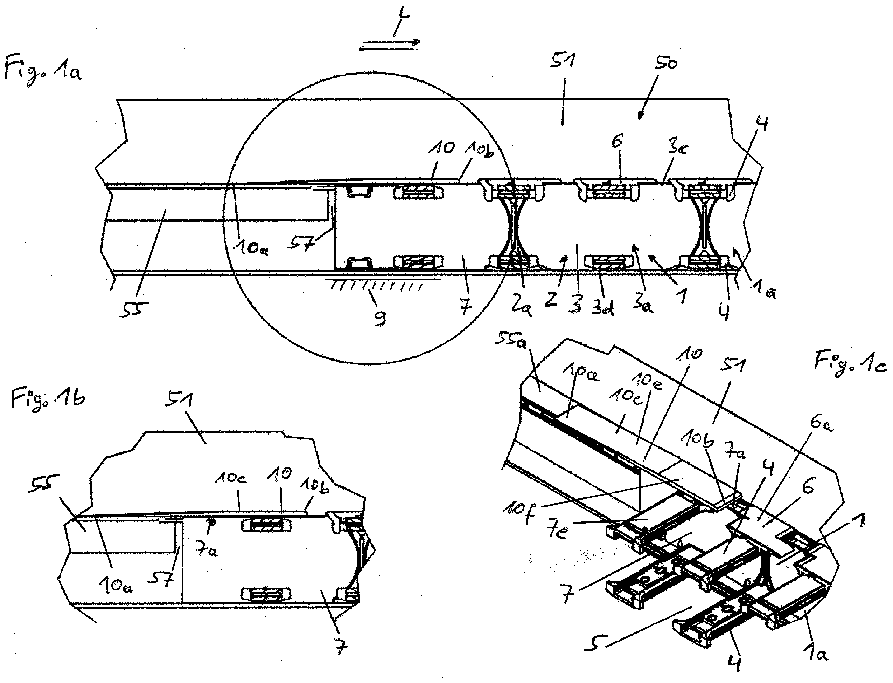

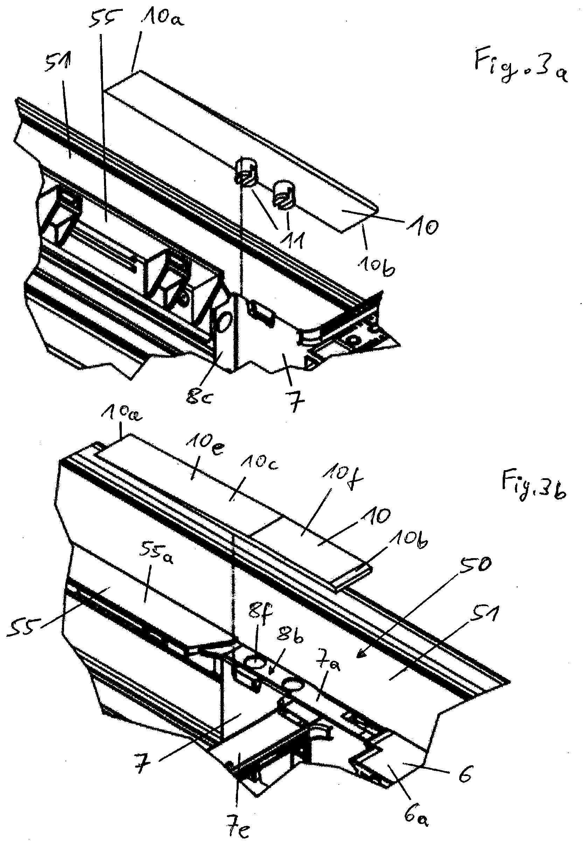

Die Figuren 1 bis 6 zeigen ein Ausführungsbeispiel einer erfindungsgemäßen Energieführungskette 1 mit einem Auflaufelement 10, und dessen Anordnung in einer Führungsrinne 50 mit Gleitelement 55. Die Energieführungskette 1 ist hierbei auch unabhängig von der Führungsrinne 50 offenbart. Das Endbefestigungsteil 7 mit Auflaufelement 10 ist hierbei auch unabhängig von der Kette 1 und/oder der Führungsrinne 50 offenbart.

Die Führungsrinne 50 ist im Allgemeinen zumindest im Wesentlichen U-förmig ausgebildet und weist einander gegenüberliegende Schenkel 51 auf. Die Führungsrinne erstreckt sich vorzugsweise über die gesamte Kettenlänge in deren entgegengesetzten Endverfahrstellungen und führt die Kette 1 bzw. das Obertrum 1b bei der Verfahrbewegung der Kette seitlich. Die Führungsrinne ist an beiden gegenüberliegenden Schenkeln 51 mit Gleitschienen 55 versehen, welche jeweils das auf diesen aufgefahrene Obertrum unterstützen.

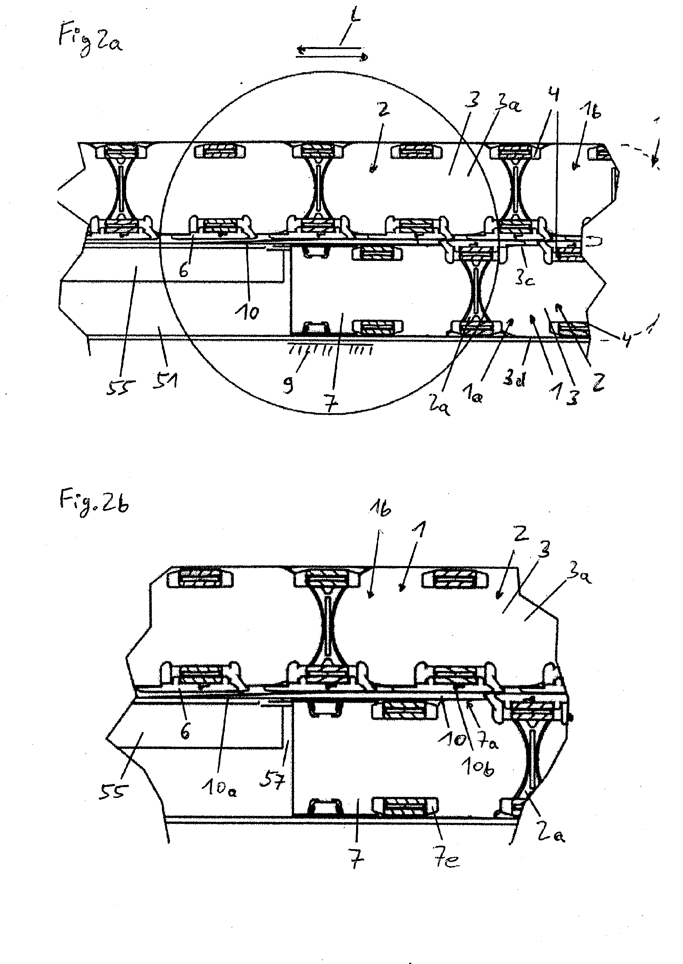

Die Energieführungskette 1 zur Führung von Leitungen zwischen zwei zueinander beweglichen, vorzugsweise zueinander längsverschiebbaren, Anschlusspunkten weist eine Vielzahl gelenkig miteinander verbundener, in Kettenlängsrichtung aufeinanderfolgender Kettenglieder 2 auf. Die Kettenglieder 2 weisen jeweils einander gegenüberliegende und seitlich voneinander beabstandete Laschen 3 mit jeweils einer inneren Seitenfläche 3a und einer äußeren Seitenfläche und mit jeweils zwei in Bezug auf die Laschenhöhe gegenüberliegenden Schmalseiten 3c,3d auf. Zumindest einige, hier sämtliche, der Kettenglieder 2 weisen mindestens einen, hier zwei, die Laschen 3 des jeweiligen Kettengliedes miteinander verbindende Querstege 4 auf, wobei die einander gegenüberliegenden Laschen und die Querstege einen Aufnahmeraum 5 für die zumindest eine Leitung ausbilden. Die Kette 1 ist unter Ausbildung eines Untertrums 1a, eines Obertrums 1b und eines diese verbindenden Umlenkbereichs 1c unter Ablage des Obertrums auf dem Untertrum anordenbar und verfahrbar, wie in Fig. 2 dargestellt. Die Kettenglieder von Untertrum und/oder Obertrum, hier von beiden Trums, sind an der dem jeweils anderen Trum zugewandten Seite mit Zusatzeinrichtungen 6 ausgerüstet oder ausrüstbar, welche hier in Form von Gleitelementen ausgebildet sind. Das Ausführungsbeispiel wird anhand von Geleitelementen beschrieben, was auch eine besonders bevorzugte Ausführungsform darstellt, die Erfindung ist jedoch nicht hierauf beschränkt. Die Kette weist ein Endbefestigungsteil 7 auf, welches an einem Endglied 2a des Untertrums 1a der Kette angekoppelt ist. Die Kette weist alternierend angeordnete Innen- und Außenlaschen auf, welche einen Laschenstrang ausbilden, die Erfindung ist hierauf jedoch nicht beschränkt. Das Endbefestigungsteil 7 weist Anschlussbefestigungsbereiche 8 zur Befestigung des Endbefestigungsteils 7 an einem Anschlusspunkt auf, wozu zur Befestigung Befestigungsmittel (nicht dargestellt) wie Schraubbolzen verwendbar sind, oder ist mittels derselben an einem ortsfesten Anschlusspunkt befestigt.

Die Gleitelemente 6 der Kette weisen eine Längserstreckungsrichtung in Kettenlängsrichtung L auf. Die Gleitflächen 6a der Gleitelemente 6 können in Kettenlängsrichtung L eine durchgehende Gleitfläche für das Obertrum 1b ausbilden.

Das Endbefestigungsteil 7 des Untertrums 1a ist an der dem Obertrum zugewandten Seite 7a mit zumindest einem keilförmigen Auflaufelement 10 versehen, wobei das Auflaufelement 10 ein Spitzende 10a und ein Breitende 10b aufweist, welche in Kettenlängsrichtung L voneinander beabstandet sind. Das Auflaufelement 10 ist mit seiner Längsrichtung zumindest im Wesentlichen parallel zur Kettenlängsrichtung L an dem Endbefestigungsteil angeordnet oder anordenbar. Das Auflaufelement 10 verjüngt sich in seiner Befestigungsanordnung an der Kette 1 in der dem Umlenkbereich 1c abgewandten Richtung hin. Die dem Obertrum zugewandte Oberseite 10c des Auflaufelementes 10 bildet eine Auflauffläche für das Obertrum 1b aus, und fungiert als Gleitfläche für das Obertrum. Die Auflauffläche oder das gesamte Auflaufelement besteht aus einem Material mit geringer Gleitreibung und/oder hoher Verschleißfestigkeit.

Die Auflaufschräge weist hier einen Winkel von ca. 2°zu der Horizontalen und damit auch zu der geradlinigen Verbindungslinie der Laschenschmalseiten 3c des Untertrums auf. Dieser Winkel entspricht auch dem zwischen der Oberseite 10c, d.h. Gleitfläche, und der Unterseite 10d des Auflaufelementes 10 Winkels. Die Höhe des Auflaufelementes am freien Spitzende beträgt hier ca. 5% der Höhe des Auflaufelementes am Breitende, sodass die als Auflauffläche fugierende Oberseite eine lange und flache Steigung aufweist und das Aufgleiten des Obertrums auf das Auflaufelement erleichtert ist, wodurch die erfindungsgemäßen Vorteile wie bspw. Laufruhe der Kette in besonderer Weise gegeben sind.

Die Breite des Auflaufelementes 10 entspricht zumindest im Wesentlichen der Breite der Gleitschienen 55 und/ oder der Breite der Gleitelemente bzw. Zusatzeinrichtungen 6 des Untertrums. Das Auflaufelement 10 kann sich aber auch zumindest im Wesentlichen über die gesamte Breite des Endbefestigungsteils erstrecken. Und die Seitenteile 7a des Endbefestigungsteils übergreifen und/oder diese verbinden. Hierdurch ist die Nachrüstung der Energieführungskette erleichtert, da nur ein Auflaufelement am Endbefestigungsteil 7 nachzurüsten ist.

In der Befestigungsanordnung des Auflaufelementes 10 an der Kette ist die Oberseite 10c bzw. die Auflauffläche desselben am Breitende 10b des Auflaufelementes auf Höhe der Oberseite der Zusatzeinrichtung bzw. auf Höhe der Gleitfläche 6a des in Kettenlängsrichtung benachbarten Gleitelementes 6 angeordnet.

Die Auflaufschräge 10e des Auflaufelementes 10, auf welcher das Obertrum auffährt und bei der Verfahrbewegung der Kette mit dieser zur Anlage kommt, ist als Ebene ausgebildet. Das Breitende 10b des Auflaufelementes weist ferner, optional, einen Endabschnitt 10f mit einer horizontal, also in Befestigungsanordnung des Auflaufelementes an der Kette 1 parallel zu den Gleitschienen 55 bzw. zur Verbindungslinie der Laschenschmalseiten, verlaufenden Oberseite auf. Die Befestigungsmittel 11 des Auflaufelementes, hier in Form vorspringender Zapfen, sind vorzugsweise zumindest teilweise oder vollständig an dem besonders stabilen Endabschnitt 10f angeordnet.

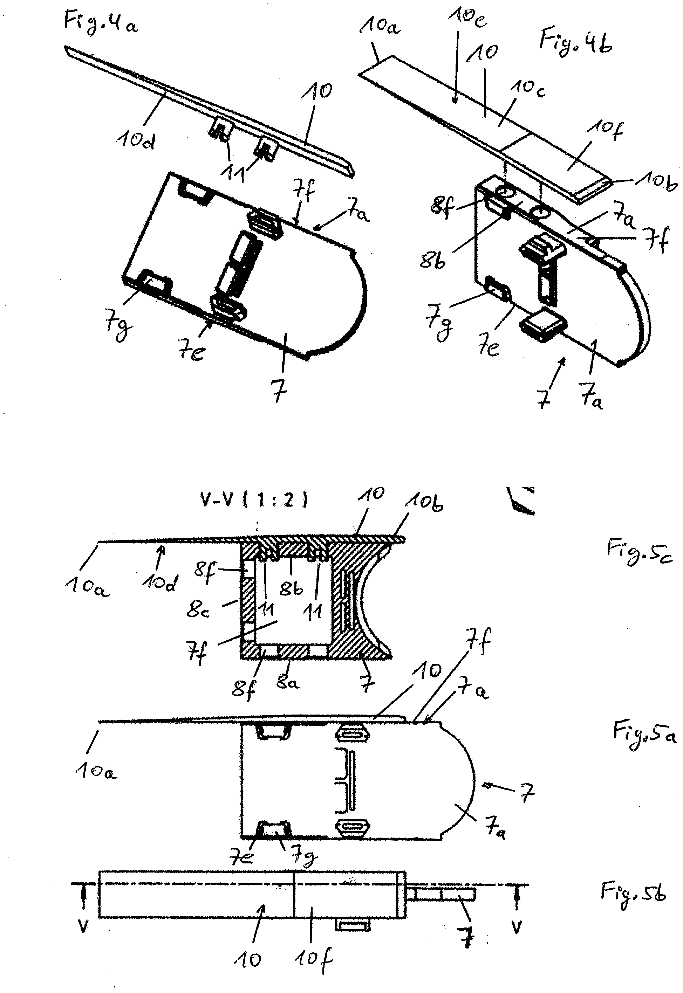

In der Befestigungsanordnung des Auflaufelementes 10 an der Kette 1 bzw. am Endbefestigungsteil 7 steht das Spitzende des Auflaufelementes von dem freien Ende des Endbefestigungsteils, welches dem Umlenkbereich 1c der Kette abgewandt ist, vor, und zwar hier nach dem Ausführungsbeispiel mit etwa halber Länge des Auflaufelementes (siehe Fig. 5).

Das Auflaufelement 10 ist an den Seitenteilen 7a des Endbefestigungsteils 7 angeordnet. An beiden Seitenteilen 7a ist jeweils ein Auflaufelement angeordnet, welche hier Spiegelbildlich zueinander ausgebildet sind. Die Ausführungen zu "dem Auflaufelement" gelten für beide Elemente. Das Auflaufelement 10 ist an dem Endbefestigungsteil befestigbar oder befestigt, hier im speziellen an einem Seitenteil desselben. Das Auslaufelement ist lösbar an dem Endbefestigungsteil 7 befestigbar oder befestigt. Die Befestigungselemente 11 des Auflaufelementes 10 sind als Form- und/oder Kraftschlussmittel ausgebildet, hier als Klemm- und/oder Rastmittel in Form der zapfenförmigen Vorsprünge. Die Befestigungsmittel 11 des Auflaufelementes sind an der Unterseite des Auflaufelementes 10 angeordnet.

Das Auflaufelement ist durch Aufstecken auf das jeweilige Endbefestigungsteil 7, insbesondere auf das Seitenteil 7a desselben, an dem Endbefestigungsteil befestigbar, was allgemein im Rahmen der Erfindung gelten kann, was die Montage des Auflaufelementes an der Kette erleichtert. Das Aufstecken kann allgemein von der offenen Rinnenoberseite her erfolgen, welche der Gleitschienenoberseite 55a zugewandt ist und/oder parallel zu dieser verläuft, wozu das Auflaufelement entsprechend ausgebildet ist. Das Aufstecken erfolgt vorzugsweise senkrecht zu der Schmalseite 7f des Seitenteiles 7a des Endbefestigungsteils 7.

Das Auflaufelement mit seinen Befestigungsmitteln ist allgemein im Rahmen der Erfindung derart ausgebildet, dass dieses ohne Demontage des Endbefestigungsteils 7 mit seiner Anordnung in der Führungsrinne erfolgen kann und/oder ohne Lösen des Endbefestigungsteil 7 von seinem Anschlusspunkt 9 an dem Endbefestigungsteil festlegbar und montierbar ist. Die Befestigungsmittel 11 sind vorzugsweise einstückig an dem Auflaufelement angeformt. Das Auflaufelement ist vorzugsweise von der offenen Rinnenoberseite her auf das Endbefestigungsteil aufsteckbar. Der Aufsteckvorgang kann außer der translativen Lageveränderung des Auflaufelementes zum Endbefestigungsteil gegebenenfalls auch eine translative oder andere Lageveränderung in einer anderen Richtung umfassen, beispielsweise in Gleitschienenlängsrichtung, welche beispielsweise durchgeführt wird, wenn das entsprechende Befestigungsmittel des Auflaufelementes in seiner Befestigungsaufnahme an dem Endbefestigungsteil angeordnet ist.

Das Endbefestigungsteil 7 weist mehrere Anschlusspunktbefestigungsbereiche 8a,8b,8c zur Befestigung an dem bzw. an einem Anschlusspunkt 9 auf, sodass das Endbefestigungsteil 7 zur Festlegung der Kette an Anschlusspunkten unterschiedlicher räumlicher Lage verwendbar ist, bspw. auch baugleiche Endbefestigungsteile zur wahlweisen Festlegung der Endglieder von Ober- und Untertrum einsetzbar sind. Bei Nutzung eines Anschlusspunktbefestigungsbereiche 8a zur Befestigung des Endbefestigungsteils ist somit zumindest ein anderer Anschlusspunktbefestigungsbereich 8b für die besagte Befestigung des Teils 7 ungenutzt. Der Anschlusspunktbefestigungsbereich 8a-8c ist jeweils verdrehsicher an der dem Untergrund bzw. einer Tragkonstruktion festlegbar, wozu er beispielsweise jeweils zwei Durchtrittsöffnungen 8f zur Durchführung von Befestigungsmitteln aufweist. Die Anschlusspunktbefestigungsbereiche 8a-8c sind jeweils an einem rahmenförmigen Bereich 7f des Endbefestigungsteils 7 angeordnet. Die Anschlusspunktbefestigungsbereiche 8a und 8b sind hierbei an gegenüberliegenden Schmalseiten 7e,7f der Seitenteile 7a des Endbefestigungsteils angeordnet, wobei - optional - an der Stirnseite des Endbefestigungsteils ein weiter Anschlusspunktbefestigungsbereich 8c vorgesehen ist, an welchem gegebenenfalls, räumlich nachteilig, das Auflaufelement 10 befestigt werden könnte. Durch Nutzung der Anschlusspunktbefestigungsbereiche zur Befestigung und Festlegung des Auflaufelementes an dem Teil 7 ist die Nachrüstung der Kette wesentlich erleichtert und zusätzliche Befestigungsmittel sind entbehrlich. Zudem ist wegen der guten Zugänglichkeit des an der oberen Schmalseite angeordneten Anschlusspunktbefestigungsbereichs 8b die nachträgliche Montage des Auflaufteils einfach durchführbar.

Die Befestigungsmittel 11 des Auflaufelementes korrespondieren somit mit den Anschlusspunktbefestigungsbereichen 8 des Endbefestigungsteils 7, vorzugsweise auch bezüglich des räumlichen Abstandes voneinander. Das Auflaufelement ist allgemein verdrehsicher an dem Endbefestigungsteil festgelegt oder festlegbar, hier durch zwei beabstandete Befestigungsmittel 11. Allgemein liegt das Auflaufelement flächig auf der jeweiligen Schmalseite des Endbefestigungsteils auf.

Nach einer Variante ist das Auflaufelement zumindest im Wesentlichen starr ausgebildet, vorzugsweise mit ebener Unterseite 10d, wie in den Figuren 1 bis 5 dargestellt.

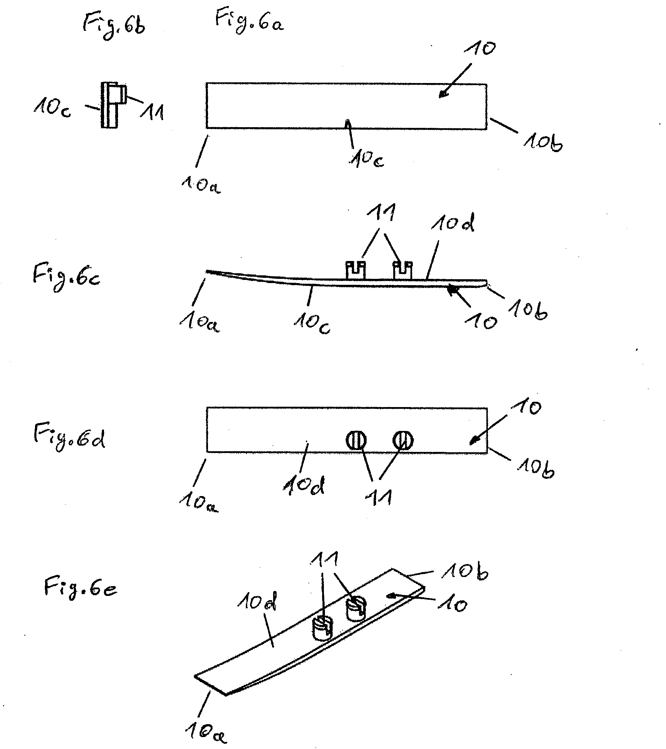

Nach einer anderen bevorzugten Variante, wie in Fig. 6 dargestellt, ist das Auflaufelement 10 in demontiertem Zustand bogenförmig, vorzugsweise in Ansicht von der Unterseite 10d konkav, und elastisch deformierbar ausgebildet. In Befestigungsanordnung an dem Endbefestigungsteil ist das Auflaufelement vorzugsweise gestreckt angeordnet, mit vorzugsweise ebener Unterseite 10d, wie in den Figuren 1 bis 5 dargestellt, wobei in diesem Zusammenhang die Fig. 4 und 5 als Explosionsdarstellungen des Endbefestigungsteil mit Auflaufelement in dessen Befestigungsstellung an der Kette und Anlage an der Gleitschiene gemäß Fig. 1 und 2 zu verstehen sind. Durch Anlage des Spitzendes 10a an der Gleitschiene 55 übt das Spitzende 10a eine Anpresskraft auf die Gleitschiene 55 aus, wodurch ein unerwünschtes Abheben des Spitzendes von der Gleitschiene bei Verfahrung der Kette unterbunden wird.

Die Länge des Auflaufelementes ist hier größer als die Länge des Endbefestigungsteils, wodurch die Steigung der als Auflauffläche fungierenden Oberseite 10c besonders flach ist.

Das Endbefestigungsteil 7 weist hier zwei im Bereich der Schmalseiten desselben angeordnete Querstege 7e, welche die Seitenteile 7a verbinden, zur Stabilisierung der Endbefestigungsteils 7 auf. An dem Endbefestigungsteil sind Zugentlastungsmittel zur Zugentlastung der geführten Leitung/en vorgesehen oder anordenbar. Das Endbefestigungsteil 7 weist hierzu Befestigungsbereiche 7g zur Befestigung einer Traverse (nicht dargestellt) auf, an welcher Zugentlastungselemente befestigbar sind.

Gemäß den Figuren 1 und 2 sind die freien Enden der Gleitschiene 50 bzw. beider Gleitschienen an den beiden Rinnenschenkeln 51 in Kettenlängsrichtung von dem Endbefestigungsteil 7 durch einen Spalt 57 beabstandet. Das Auflaufelement ist hierbei derart an dem Endbefestigungsteil 7 angeordnet, dass der Endbereich mit Spitzende 10a den Spalt 57 zwischen dem Endbefestigungsteil 7 und der Gleitschiene 55 zumindest teilweise oder hier vollständig überbrückt. Das Auflaufelement 10 überdeckt hierbei in seiner Befestigungsstellung an der Kette den Endbereich 55b der Gleitschiene und liegt, mit einer gewissen Vorspannung oder gegebenenfalls auch ohne Vorspannung an der Gleitschienenoberseite 55a an.

Die Verjüngung des Auflaufelement ist somit durch eine Querschnittsverkleinerung des Auflaufelementes ausgebildet, genauer gesagt durch eine Verringerung der Querschnittshöhe des Auflaufelementes. Der sich verjüngende Bereich des Auflaufelementes verjüngt sich hier stetig und mit gleichbleibender Steigung über die Längserstreckung der Auflaufschräge. Der sich verjüngende Bereich des Auflaufelementes bildet hier die Auflaufschräge des Auflaufelementes aus. Der sich verjüngende Bereich des Auflaufelementes bzw. die Auflaufschräge erstrecken sich hier über ca. 66% der Länge des Auflaufelementes.

Der horizontale Abschnitt des Auflaufelementes erstreckt sich über ca. 33% der Länge des Auflaufelementes in dessen Montageanordnung. Die Befestigungsmittel des Auflaufelementes zur Befestigung desselben an dem Endbefestigungsteil der Energieführungskette sind an dem horizontalen Abschnitt des Auflaufelements angeordnet. Das Spitzende des Auflaufelementes weist keine derartigen Befestigungsmittel auf. Die Oberseite und/oder die Unterseite des horizontalen Abschnittes des Auflaufelementes sind eben ausgebildet. Die Oberseite und/oder die Unterseite des horizontalen Abschnittes des Auflaufelementes und verlaufen bei montiertem Auflaufelement parallel zu der Gleitschienenoberseite, auf welcher das Obertrum ablegbar ist und/oder parallel zu der Endbefestigungsteilschmalseite, welcher das Auflaufelement in Montageanordnung zugewandt angeordnet ist oder an welcher dieses vorzugsweise flächig anliegt.

Die Gleitschienen sind hier horizontal - also in horizontaler Raumrichtung - angeordnet. Die Gleitschienen sind hier geradlinig ausgebildet.

In Montageanordnung des Auflaufelementes an dem Endbefestigungsteil, insbesondere mit Anlage des Auflaufelementes an der Gleitschiene, erstreckt sich nach dem Ausführungsbeispiel die dem Endbefestigungsteil bzw. der Gleitschiene zugewandte Unterseite des Auflaufelementes horizontal in Bezug auf die Raumrichtung bzw. in geradliniger Verlängerung und fluchtend mit der Oberseite der Schmalseite des Endbefestigungsteils.

Unter einer Befestigung des Auflaufelementes "an der Kette" sei jeweils insbesondere eine Befestigung "an dem Endbefestigungsteil" verstanden.

## Patentansprüche

1. Energieführungskette zur Führung von Leitungen zwischen zwei Anschlusspunkten, wobei die Kette (1) eine Vielzahl gelenkig miteinander verbundener, in Kettenlängsrichtung aufeinanderfolgender Kettenglieder (2) aufweist, wobei die Kettenglieder (2) jeweils einander gegenüberliegende und seitlich voneinander beabstandete Laschen (3) mit jeweils einer inneren und einer äußeren Seitenfläche (3a) und mit jeweils zwei in Bezug auf die Laschenhöhe gegenüberliegenden Schmalseiten (3c,3d) aufweisen, wobei zumindest einige oder sämtliche der Kettenglieder (2) mindestens einen die Laschen des (3) jeweiligen Kettengliedes (2) miteinander verbindenden Quersteg (4) aufweisen, wobei die einander gegenüberliegenden Laschen (3) und die Querstege (4) einen Aufnahmeraum für die zumindest eine Leitung ausbilden, wobei die Energieführungskette (1) unter Ausbildung eines Untertrums (1a), eines Obertrums (1b) und eines diese verbindenden Umlenkbereichs (1c) unter Ablage des Obertrums (1b) auf dem Untertrum (1a) anordenbar und verfahrbar ist, wobei die Kettenglieder (2) von Untertrum (1a) und/oder Obertrum (1b) an der dem jeweils anderen Trum zugewandten Seite mit Zusatzeinrichtungen (6) wie beispielsweise Gleitelementen ausgerüstet oder ausrüstbar sind, wobei die Kette (1) ein Endbefestigungsteil (7) aufweist, welches an einem Endglied des Untertrums (1a) der Kette (1) angekoppelt ist und welches Anschlussbefestigungsmittel (8) zur Befestigung des Endbefestigungsteils (7) an einem Anschlusspunkt aufweist oder mittels derselben an einem ortsfesten Anschlusspunkt befestigt ist,
**dadurch gekennzeichnet, dass** das Endbefestigungsteil (7) des Untertrums (1a) an der dem Obertrum (1b) zugewandten Seite zumindest ein keilförmiges Auflaufelement (10) aufweist, welches lösbar an dem Endbefestigungsteil befestigbar oder befestigt ist,
dass das keilförmige Auflaufelement ein Spitzende (10a) und ein Breitende (10b), welche in Kettenlängsrichtung voneinander beabstandet sind, aufweist,
und dass das keilförmige Auflaufelement (10) mit seiner Längsrichtung zumindest im Wesentlichen parallel zur Kettenlängsrichtung an dem Endbefestigungsteil (7) angeordnet oder anordenbar ist, wobei sich das Auflaufelement (10) in Befestigungsanordnung an der Kette (1) in der dem Umlenkbereich (1c) abgewandten Richtung hin verjüngt und die dem Obertrum (1b) zugewandte Oberseite des Auflaufelementes (10) eine Auflauffläche für das Obertrum (1b) ausbildet.

2. Energieführungskette nach Anspruch 1, **dadurch ge- kennzeichnet,** dass in Befestigungsanordnung des Auflaufelementes (10) an der Kette (1) die Auflauffläche desselben am Breitende (10b) des Auflaufelementes (10) zumindest im Wesentlichen auf Höhe der Gleitfläche des in Kettenlängsrichtung benachbarten Gleitelementes (6) bzw. zumindest im Wesentlichen auf Höhe der Oberseite der in Kettenlängsrichtung benachbarten Zusatzeinrichtung (6) angeordnet ist.

3. Energieführungskette nach Anspruch 1 oder 2, **dadurch gekennzeichnet , dass** das Spitzende des Auflaufelementes (10) in dessen Befestigungsanordnung an der Kette (1) von dem freien Ende des Endbefestigungsteils (7) vorsteht.

4. Energieführungskette nach einem der Ansprüche 1 bis 3, **dadurch gekennzeichnet, dass** das Auflaufelement (10) an den Seitenteilen des Endbefestigungsteils (7) angeordnet ist.

5. Energieführungskette nach einem der Ansprüche 1 bis 4, **dadurch gekennzeichnet, dass** das Auflaufelement (10) an dem Endbefestigungsteil befestigbar oder befestigt ist.

6. Energieführungskette nach einem der Ansprüche 1 bis 5, **dadurch gekennzeichnet,** das Endbefestigungsteil (7) mehrere Anschlusspunktbefestigungsbereiche (8a,8b,8c) zur Befestigung an verschiedenen Anschlusspunkten aufweist und dass das Auflaufelement (10) an einem Anschlusspunktbefestigungsbereich (8a,8b,8c) des Endbefestigungsteils (7) befestigt oder zur Befestigung an diesem ausgebildet ist.

7. Energieführungskette nach einem der Ansprüche 1 bis 6, **dadurch gekennzeichnet, dass** das Auflaufelement (10) vorzugsweise einstückig angeformte Befestigungsmittel (11) aufweist, welche mit Anschlusspunktbefestigungsbereichen (8a,8b,8c) des Endbefestigungsteils (7) korrespondieren.

8. Energieführungskette nach einem der Ansprüche 1 bis 7, **dadurch gekennzeichnet, dass** das Auflaufelement (10) zumindest im Wesentlichen starr ausgebildet ist.

9. Energieführungskette nach einem der Ansprüche 1 bis 7, **dadurch gekennzeichnet, dass** das Auflaufelement (10) elastisch deformierbar und vorzugsweise in demontiertem Zustand bogenförmig ausgebildet ist.

10. Energieführungskette nach einem der Ansprüche 1 bis 9, **dadurch gekennzeichnet, dass** zumindest die Auflauffläche des Auflaufelementes (10) aus einem Material mit gegenüber dem Kettenlaschenmaterial geringer Gleitreibung und/oder höherer Verschleißfestigkeit besteht.

11. Energieführungskette nach einem der Ansprüche 1 bis 10, **dadurch gekennzeichnet, dass** die Länge des Auflaufelementes (10) größer/gleich der 0,5-fachen oder größer/gleich der 0,75-fachen Länge des Endbefestigungsteils (7) beträgt.

12. Endbefestigungsteil für eine Energieführungskette (1) nach dem Oberbegriff von Anspruch 1 oder nach einem der Ansprüche 1 bis 11, wobei das Endbefestigungsteil (7) einen Ankoppelungsbereich zur Ankoppelung eines Kettenendgliedes aufweist, **dadurch gekennzeichnet, dass** das Endbefestigungsteil zumindest ein keilförmiges Auflaufelement (10) mit einem Spitzende (10a) und einem Breitende (10b) aufweist, welche in Keillängsrichtung voneinander beabstandet sind, und dass sich das Auflaufelement (10) zu dem dem Befestigungsbereich hin abgewandten Ende verjüngt, und dass das Auslaufelement (10) lösbar an dem Endbefestigungsteil befestigbar oder befestigt ist.

13. Führungsrinne mit einer Energieführungskette (1) nach nach einem der Ansprüche 1 bis 11, welche die Energieführungskette (1) bei deren Verfahrbewegung seitlich führt, und wobei die Führungsrinne (50) zumindest eine in deren Längsrichtung verlaufende Gleitschiene (55) aufweist, auf welcher das Obertrum (1b) der Energieführungskette (1) ablegbar oder abgelegt ist.

14. Führungsrinne nach Anspruch 13, **dadurch gekennzeichnet, dass** das Auflaufelement (10) derart angeordnet ist, dass die Auflaufschräge desselben einen Höhenversatz zwischen der Oberseite der Gleitschiene (55) und der Oberseite des Untertrums zumindest teilweise oder vollständig ausgleicht.

15. Führungsrinne nach Anspruch 13 oder 14, **dadurch gekennzeichnet, dass** das keilförmige Auflaufelement (10) einen Spalt (57) zwischen dem Endbefestigungsteil (7) und der Gleitschiene (55) zumindest teilweise überbrückt.

16. Führungsrinne nach einem der Ansprüche 13 bis 15,
**dadurch gekennzeichnet, dass** das Auflaufelement (10) den Endbereich der Gleitschiene (55) überdeckt und vorzugsweise in Befestigungsanordnung des Auflaufelementes (10) an der Kette (1) an der Gleitschienenoberseite anliegt.

## Claims

1. Drag chain for guiding cables between two connection points, wherein the chain (1) has a plurality of chain links (2) connected to one another in an articulated manner and succeeding each other in the longitudinal direction of the chain, wherein the chain links (2) each have mutually opposite plates (3) which are spaced apart laterally from one another and each have an inner and an outer side surface (3a) and each have two narrow sides (3c,3d) which are opposite one another with respect to the plate height, wherein at least some or all of the chain links (2) have at least one crosspiece (4) which connects the plates (3) of the respective chain link (2) to one another, wherein the mutually opposite link plates (3) and the crosspieces (4) form a receiving space for the at least one cable, wherein the drag chain (1) can be arranged and moved by forming a lower track (1a), an upper track (1b) and a deflection region (1c) connecting the latter, with the upper track (1b) being placed on the lower track (1a), wherein the chain links (2) of the lower track (1a) and/or upper track (1b) are or can be fitted with additional elements (6), such as sliding elements, on the side facing the respective other track, the chain (1) having an end-securing part (7) which is coupled to an end link of the lower track (1a) of the chain (1) and which has connection-securing means (8) for securing the end-securing part (7) to a connection point or said chain is secured to a stationary connection point by means of the same, **characterized in that** the end-securing part (7) of the lower track (1a) has, on the side facing the upper track (1b), at least one wedge-shaped ramp-type element (10), which is or can be detachably fixed to the end-securing part,
**in that** the wedge-shaped ramp-type element has a pointed end (10a) and a broad end (10b) which are spaced apart from one another in the longitudinal direction of the chain, and **in that** the wedge-shaped ramp-type element (10) is arranged or can be arranged on the end-securing part (7) with its longitudinal direction at least substantially parallel to the longitudinal direction of the chain, wherein, in the secured arrangement on the chain (1), the ramp-type element (10) tapers in the direction leading away from the deflection region (1c) and the upper side of the ramp-type element (10) facing the upper track (1b) forms a ramp-type surface for the upper track (1b).

2. Drag chain according to claim 1, **characterized in that** in the secured arrangement of the ramp-type element (10) on the chain (1), the ramp-type surface thereof at the broad end (10b) of the ramp-type element (10) is arranged at least substantially at the level of the sliding surface of the sliding element (6) adjacent in the longitudinal direction of the chain or at least substantially at the level of the upper side of the additional element (6) adjacent in the longitudinal direction of the chain.

3. Drag chain according to claim 1 or 2, **characterized in that** the pointed end of the ramp-type element (10) in its secured arrangement on the chain (1) protrudes from the free end of the end-securing part (7).

4. Drag chain according to any one of claims 1 to 3, **characterized in that** the ramp-type element (10) is arranged on the side parts of the end-securing part (7).

5. Drag chain according to any one of claims 1 to 4, **characterized in that** the ramp-type element (10) can be secured or is secured to the end-securing part.

6. Drag chain according to any one of claims 1 to 5, **characterized in that** the end-securing part (7) has a plurality of connection point securing regions (8a,8b,8c) for securing to various connection points and **in that** the ramp-type element (10) is secured to or designed for securing to a connection point securing region (8a,8b,8c) of the end-securing part (7).

7. Drag chain according to any one of claims 1 to 6, **characterized in that** the ramp-type element (10) preferably has integrally formed securing means (11) which correspond to connection point securing regions (8a,8b,8c) of the end-securing part (7).

8. Drag chain according to any one of claims 1 to 7, **characterized in that** the ramp-type element (10) is at least substantially rigid.

9. Drag chain according to any one of claims 1 to 7, **characterized in that** the ramp-type element (10) is elastically deformable and is preferably of arcuate design in the dismantled state.

10. Drag chain according to any one of the claims 1 to 9, **characterized in that** at least the ramp-type surface of the ramp-type element (10) consists of a material with low sliding friction and/or higher wear resistance compared to the chain plate material.

11. Drag chain according to any one of claims 1 to 10, **characterized in that** the length of the ramp-type element (10) is greater than/equal to 0.5 times or greater than/equal to 0.75 times the length of the end-securing part (7).

12. End-securing part for a drag chain (1) according to the generic part of claim 1 or according to any one of claims 1 to 11, wherein the end-securing part (7) has a coupling region for coupling a chain end link, **characterized in that** the end-securing part has at least one wedge-shaped ramp-type element (10) with a pointed end (10a) and a broad end (10b) which are spaced apart from one another in the longitudinal direction of the wedge, and **in that** the ramp-type element (10) tapers towards the end facing away from the fastening region, and **in that** the ramp-type element (10) can be or is detachably secured to the end-securing part (7).

13. Guide channel with a drag chain (1) according to any one of claims 1 to 11, which guides the drag chain (1) laterally during its travel movement, and wherein the guide channel (50) has at least one slide rail (55) extending in its longitudinal direction, on which the upper track (1b) of the drag chain (1) can be placed or is placed.

14. Guide channel according to claim 13, **characterized in that** the ramp-type element (10) is arranged in such a way that the ramp-type slope thereof compensates a height offset between the upper side of the slide rail (55) and the upper side of the lower track at least partially or completely.

15. Guide channel according to claim 13 or 14, **characterized in that** the wedge-shaped ramp-type element (10) at least partially bridges a gap (57) between the end-securing part (7) and the slide rail (55).

16. Guide channel according to claim 13 to 15, **characterized in that** the ramp-type element (10) covers the end region of the slide rail (55) and preferably rests against the slide rail upper side in the secured arrangement of the ramp-type element (10) on the chain (1).

## Revendications

1. Chaîne porte-câbles destinée à guider des câbles entre deux points de raccordement, dans laquelle la chaîne (1) comporte une pluralité de maillons de chaîne (2) reliés entre eux de manière articulée et se succédant dans la direction longitudinale de la chaîne, les maillons de chaîne (2) comportant chacun des plaques (3) opposées les unes aux autres, espacées latéralement les unes des autres et présentant chacune une surface latérale intérieure et une surface latérale extérieure (3a) et comportent chacune deux côtés étroits (3c, 3d) qui sont opposés l'un à l'autre par rapport à la hauteur de la plaque, dans laquelle au moins certains ou tous les maillons de chaîne (2) comportent au moins une traverse (4) qui relie entre elles les plaques (3) du maillon de chaîne (2) respectif, dans laquelle les plaques mutuellement opposées (3) et les traverses (4) forment un espace de réception pour l'au moins un câble, la chaîne porte-câbles (1) pouvant être disposée et déplacée en formant une voie inférieure (1a), une voie supérieure (1b) et une zone de renvoi (1c) reliant ces dernières, et en plaçant la voie supérieure (1b) sur la voie inférieure (1a), dans laquelle les maillons de chaîne (2) de la voie inférieure (1a) et/ou de la voie supérieure (1b) sont ou peuvent être équipés d'éléments supplémentaires (6), tels que des éléments coulissants, sur le côté tourné vers l'autre voie respective, la chaîne (1) comportant une pièce de fixation d'extrémité (7) qui est couplée à un maillon d'extrémité de la voie inférieure (1a) de la chaîne (1) et qui comporte des moyens de sécurisation de la connexion (8) pour fixer la pièce de fixation d'extrémité (7) à un point de connexion ou est fixée à un point de connexion fixe par ces moyens, **caractérisée en ce que** la pièce de fixation d'extrémité (7) de la voie inférieure (1a) comporte, du côté tourné vers la voie supérieure (1b), au moins un élément en forme de rampe en coin (10), qui est ou peut être fixé de manière amovible à la partie de fixation d'extrémité,
**en ce que** l'élément en forme de rampe en coin comporte une extrémité pointue (10a) et une extrémité large (10b) qui sont espacées l'une de l'autre dans la direction longitudinale de la chaîne,
et **en ce que** l'élément en forme de rampe en coin (10) est disposé ou peut être disposé sur la pièce de fixation d'extrémité (7) avec sa direction longitudinale au moins sensiblement parallèle à la direction longitudinale de la chaîne, dans laquelle, dans la disposition de fixation sur la chaîne (1), l'élément en forme de rampe (10) se rétrécit dans la direction s'éloignant de la zone de renvoi (1c) et la face supérieure de l'élément en forme de rampe (10) tournée vers la voie supérieure (1b) forme une surface en forme de rampe pour la voie supérieure (1b).

2. Chaîne porte-câbles selon la revendication 1, **caractérisée en ce que**, dans la disposition de fixation de l'élément en forme de rampe (10) sur la chaîne (1), sa surface en forme de rampe, au niveau de l'extrémité large (10b) de l'élément en forme de rampe (10), est disposée au moins sensiblement au niveau de la surface de glissement de l'élément coulissant (6) adjacent dans la direction longitudinale de la chaîne ou au moins sensiblement au niveau de la face supérieure de l'élément supplémentaire (6) adjacent dans la direction longitudinale de la chaîne.

3. Chaîne porte-câbles selon la revendication 1 ou 2, **caractérisée en ce que** l'extrémité pointue de l'élément en forme de rampe (10), dans sa disposition de fixation sur la chaîne (1), dépasse de l'extrémité libre de la pièce de fixation d'extrémité (7).

4. Chaîne porte-câbles selon l'une quelconque des revendications 1 à 3, **caractérisée en ce que** l'élément en forme de rampe (10) est disposé sur les parties latérales de la pièce de fixation d'extrémité (7).

5. Chaîne porte-câbles selon l'une quelconque des revendications 1 à 4, **caractérisée en ce que** l'élément en forme de rampe (10) peut être fixé ou est fixé à la partie de fixation d'extrémité.

6. Chaîne porte-câbles selon l'une quelconque des revendications 1 à 5, **caractérisée en ce que** la pièce de fixation d'extrémité (7) comporte une pluralité de zones de fixation de points de connexion (8a, 8b, 8c) destinées à la fixation à divers points de connexion et **en ce que** l'élément en forme de rampe (10) est fixé à ou conçu pour être fixé à une zone de fixation de point de connexion (8a, 8b, 8c) de la pièce de fixation d'extrémité (7).

7. Chaîne porte câbles, selon l'une quelconque des revendications 1 à 6, **caractérisée en ce que** l'élément en forme de rampe (10) comporte de préférence des moyens de fixation (11) moulés d'un seul tenant qui correspondent aux zones de fixation de points de connexion (8a, 8b, 8c) de la pièce de fixation d'extrémité (7).

8. Chaîne porte-câbles selon l'une quelconque des revendications 1 à 7, **caractérisée en ce que** l'élément en forme de rampe (10) est au moins sensiblement rigide.

9. Chaîne porte-câbles selon l'une quelconque des revendications 1 à 7, **caractérisée en ce que** l'élément en forme de rampe (10) est élastiquement déformable et présente de préférence une configuration arquée à l'état démonté.

10. Chaîne porte-câbles selon l'une quelconque des revendications 1 à 9, **caractérisée en ce qu'**au moins la surface en forme de rampe de l'élément en forme de rampe (10) est constituée d'un matériau présentant un faible frottement de glissement et/ou une résistance à l'usure supérieure à celle du matériau de la plaque de chaîne.

11. Chaîne porte-câbles selon l'une quelconque des revendications 1 à 10, **caractérisée en ce que** la longueur de l'élément en forme de rampe (10) est supérieure ou égale à 0,5 fois ou supérieure ou égale à 0,75 fois la longueur de la pièce de fixation d'extrémité (7).

12. Pièce de fixation d'extrémité pour une chaîne porte-câbles (1) selon la partie générique de la revendication 1 ou selon l'une quelconque des revendications 1 à 11, dans laquelle la pièce de fixation d'extrémité (7) comporte une zone d'accouplement pour accoupler un maillon d'extrémité de chaîne, **caractérisée en ce que** la pièce de fixation d'extrémité comporte au moins un élément en forme de rampe en forme de coin (10) avec une extrémité pointue (10a) et une extrémité large (10b) qui sont espacées l'une de l'autre dans la direction longitudinale du coin, et **en ce que** l'élément de type rampe (10) se rétrécit vers l'extrémité opposée à la zone de fixation, et **en ce que** l'élément en forme de rampe (10) peut être ou est fixé de manière amovible à la pièce de fixation d'extrémité (7).

13. Canal de guidage avec une chaîne porte-câbles (1) selon l'une quelconque des revendications 1 à 11, qui guide latéralement la chaîne porte-câbles (1) pendant son mouvement de déplacement, et dans lequel le canal de guidage (50) comporte au moins un rail de glissement (55) s'étendant dans sa direction longitudinale, sur lequel la voie supérieure (1b) de la chaîne d'entraînement (1) peut être placée ou est placée.

14. Canal de guidage selon la revendication 13, **caractérisée en ce que** l'élément en forme de rampe (10) est agencé de telle sorte que sa pente en forme de rampe compense, au moins partiellement ou complètement, un décalage en hauteur entre la face supérieure du rail de glissement (55) et la face supérieure de la voie inférieure.

15. Canal de guidage selon la revendication 13 ou 14, **caractérisée en ce que** l'élément en forme de rampe (10) en forme de coin comble au moins partiellement un espace (57) entre la pièce de fixation d'extrémité (7) et le rail de glissement (55).

16. Canal de guidage selon l'une quelconque des revendications 13 à 15, **caractérisée en ce que** l'élément en forme de rampe (10) recouvre la région d'extrémité du rail de glissement (55) et repose de préférence contre la face supérieure du rail de glissement lorsque l'élément en forme de rampe (10) est fixé sur la chaîne (1).
